# EUROPEAN PATENT APPLICATION

(11) **EP 1 943 981 A1**
(43) Date of publication of application: **16.07.2008**
(21) Application number: 08003803.7
(22) Date of filing: 08.06.2006
(51) Int. Cl.: A61C 13/00, A61C 5/10

(54) **Dental Prosthesis**

(30) Priority: 18.07.2005 MY 0503268
(62) Divisional of application: 06779703.5
(71) Applicant: Bozdemir, Adnan, 50400 Kuala Lumpur (MY)
(72) Inventor: Jalan, Sentul Indah, Kuala Lumpur 51100 (MY)
(74) Representative: Grünecker, Kinkeldey, Stockmair & Schwanhäusser Anwaltssozietät

(57) **Abstract**

The method for producing ceramic coping of the present invention comprises the following steps: (i) covering a tooth model with at least one layer of plastic; (ii) coating a plastic covered tooth model from step (i) with fused alumina gel and letting it dry to form a ceramic coping in green state; (iii) sintering the ceramic coping in green state from step (ii) at a temperature from 950 to 12000C; (iv) coating the ceramic coping from step (iii) with crystal powder; (v) crystal hardening the crystal powder coated ceramic coping from step (iv) at a temperature up to 11800C. then, the finished ceramic coping - crystal hardened ceramic coping can be coated with an outer aesthetic layer to form a dental prosthesis.

## Description

### Field of Invention

This invention relates to metal-free dental prosthesis. In particular, this invention provides a method for producing the inner supporting structure of a metal-free dental prosthesis.

### Background of the Invention

Dental prosthesis, for example a dental crown or a dental bridge, normally consists of an inner supporting structure and an outer aesthetic layer. In dental terminology, the inner supporting structure of a dental prosthesis is called coping. For a porcelain fused metal (PFM) dental prosthesis, its coping is made of metal. A PFM dental prosthesis faces significant disadvantages as it does not fit well to the mouth. During production of a PFM dental prosthesis, if the margin of its metal coping is miscalculated, adjustment is not possible. Although metal coping enhances mechanical strength of the resultant PFM dental prosthesis but it gives a tinge of greyish colour to the outer aesthetic layer thus causing the resultant PFM dental prosthesis to have low aesthetic value. Metal coping is also not bio-compatible as corrosion of the metal therein causes discolouration of the outer aesthetic layer and inflammation of gum tissue adjacent to the resultant dental prosthesis.

Metal-free dental prosthesis has been developed whereby ceramic coping is used in place of metal coping. Despite that, metal is still the primary choice of coping material because ceramic coping is often too weak to provide the resultant dental prosthesis with the needed mechanical strength in practice, or else the technique used for producing ceramic coping is excessively complicated and expensive to be implemented.

Types of ceramic coping which are available include alumina-reinforced porcelain coping, glass-infiltrated ceramic coping, pure alumina coping and glass ceramic coping. Alumina-reinforced porcelain coping has insufficient mechanical strength to allow its use for restoring posteriors or for constructing a dental bridge. Glass-infiltrated ceramic coping, pure alumina coping and glass ceramic coping all offer high mechanical strength but the available techniques for producing these ceramic copings are simply too labor intensive or too cost intensive.

One of the available techniques for producing ceramic coping involves casting a mould for producing ceramic coping by using an investment material; follow by press-moulding the ceramic coping material under high pressure and temperature. An example of this technique is described in United States patent number 6,126,732. According to this patent, a ceramic coping is produced by press-moulding a composition comprising from 1 to 50 parts by weight glass particles and from 50 to 99 parts by weight ceramic particles at a pressure up to about 40 MPa and a temperature from 800°C to 1300°C. This process is very time consuming as it requires mould casting steps and it is also very energy consuming as it requires high pressure and temperature.

Another available technique for producing ceramic coping requires the use of a computer assisted design / computer assisted manufacture (CAD / CAM) system. In this technique, a dental technician has to produce a model of the tooth to be restored, digitize geometry of the tooth model and design a coping based on the digital geometry information of the tooth model by using a CAD system. After that, the digital design information of the coping has to be sent through internet to a designated dental laboratory to produce the coping by using a CAM system. The coping is then returned to the dental technician for building the outer aesthetic layer. This technique renders a dental technician a lot of limitations as the dental technician has to depend on a third party dental laboratory to produce a coping. An example of this technique is provided by a PCT international publication number WO 2005/046502.

Yet another available technique for producing ceramic coping is described in European patent number 0241384 wherein the ceramic coping is produced by contacting a model of the tooth to be restored with a slip of metal oxide particles to form an infrastructure of agglomerated metal oxide particles on the tooth model; baking the infrastructure together with the tooth model to effect dehydration and separation of the tooth model from the infrastructure; fritting the infrastructure and finally impregnating the infrastructure with glass. To effect separation of the tooth model from the infrastructure, the temperature during the baking step must be stringently controlled so that it is raised slowly, for instance 1°C per minute, until it reaches a temperature of about 180°C and subsequently in a more rapid manner up to about 330°C. This results in an overall long period of time needed for producing the ceramic coping.

There is a need for a method for producing ceramic coping with high mechanical strength which is time and energy efficient and at the same time does not require high price apparatus.

### Summary of the Invention

The present invention relates to a method for producing ceramic coping of a dental prosthesis comprising the following steps:
i) covering a model of the tooth to be restored with at least one layer of plastic;
ii) coating the plastic covered tooth model from step (i) with fused alumina gel and letting it dry to form a ceramic coping in green state;
iii) sintering the ceramic coping in green state from step (ii) at a temperature from 950 to 1200°C;
iv) coating the ceramic coping from step (iii) with crystal powder;
v) crystal hardening the crystal powder coated ceramic coping from step (iv) at a temperature up to 1180°C.

If the ceramic coping to be produced is a ceramic coping of a dental bridge, the following steps are further incorporated in between step (ii) and step (iii) as mentioned above:
a) arranging and holding together individual tooth models with ceramic copings formed on them, as produced by following steps (i) and (ii), according to their full mouth position;
b) applying fused alumina gel in between two adjacent ceramic copings as juncture material and letting it dry to form the ceramic coping of a dental bridge in green state.

The sintering step (iii) is preferably conducted under vacuum for about 3 to 5 minutes of total 5 to 10 minutes of sintering time and it is preferably carried out according to the following steps:
a) pre-drying the ceramic coping in green state at 500 - 600°C for 3 - 6 minutes;
b) increasing the temperature at a rate of 80 - 120°C/minute until it reaches the final temperature of 950 - 1200°C;
c) holding the final temperature for 5 - 10 minutes whereby in the last 3 - 5 minutes of the holding time, the vacuum condition is lifted.

The crystal hardening step (v) is preferably conducted under vacuum for about 15 to 30 minutes of total 30 to 50 minutes of crystal hardening time and it is preferably carried out according to the following steps:
a) pre-drying the crystal powder coated ceramic coping at 500 - 600°C for 3 - 6 minutes;
b) increasing the temperature at a rate of 80 - 120°C/minute until it reaches the final temperature of 1160-1180°C;
c) holding the final temperature for 30 - 50 minutes whereby in the last 15 - 20 minutes of the holding time, the vacuum condition is lifted.

Each plastic layer used in step (i) preferably has a thickness of 0.1 - 0.15 mm and the plastic material used is preferably polyvinylchloride (PVC). Step (i) is preferably carried out according to the following steps:
a) marking the margin of the tooth model;
b) stacking a layer of polyvinylchloride (PVC) foil having thickness of 0.1 - 0.15 mm on top of a layer of polypropylene (PP) foil having thickness of 0.5 - 0.6 mm and heating them on a propane gas flame until they are deformable;
c) placing the now deformable plastic foils from step (b) on top of a jar filled with silicon or any other pressure deformable material;
d) dipping the tooth model into the deformable plastic foils covered silicon jar from step (c) so that the plastic foils would deform to take the shape of the tooth model;
e) cutting out the part of the plastic foils which has taken the shape of the tooth model along the margin;
f) separating the PVC layer of the cut-out from the PP layer;
g) placing the PVC cut-out from step (f) on the tooth model so that the tooth model is covered with a first layer of plastic;
h) repeating steps (b) to (g) on the tooth model covered with the first layer of plastic so that it would be covered with a second layer of plastic.

The ceramic coping of a dental prosthesis produced according to the method of present invention can exhibit flexural strength of up to 530 MPa - 630 MPa and a hardness of 12 according to the Mohs Scale of Mineral Hardness.

### Brief Description of Drawings

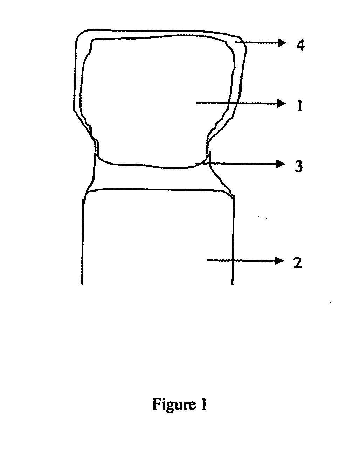

Figure 1 shows an individual tooth model with an individual ceramic coping placed on it. Designation of the labels in Figure 1: 1 stands for tooth model; 2 stands for body of the tooth model; 3 stands for margin of the tooth model or the ceramic coping; 4 stands for ceramic coping.

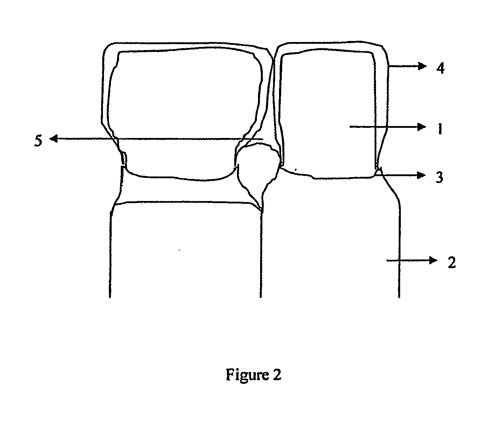

Figure 2 shows two individual tooth models with a ceramic coping for a two-unit dental bridge placed on them.
   Designation of the labels in Figure 2: 1 stands for tooth model; 2 stands for body of the tooth model; 3 stands for margin of the tooth model or the ceramic coping; 4 stands for ceramic coping; 5 stands for juncture of the ceramic coping for the two-unit dental bridge.
Figure 3 shows that a tooth model is dipped into a deformable plastic foils covered silicon jar so that the plastic foils would deform to take the shape of the tooth model.
   Designation of the label in Figure 3: 2 stands for body of a tooth model.
Figure 4 shows that a plastic covered tooth model is dipped into a jar of fused alumina gel.
   Designation of the label in Figure 4: 2 stands for body of a tooth model.
Figure 5 shows that a ceramic coping in green state is taken off from a tooth model. The tooth model is still covered with a layer of plastic after the ceramic coping has been taken off whereas another layer of plastic formed an inner lining of the ceramic coping.
   Designation of the labels in Figure 5: 2 stands for body of a tooth model; 3 stands for margin of the tooth model or the ceramic coping; 4 stands for ceramic coping.
Figure 6 shows that a coat of crystal powder is being applied on a ceramic coping.
   Designation of the label in Figure 6: 4 stands for ceramic coping.

### Detailed Description of the Invention

The present invention relates to a method for producing ceramic coping, particularly for producing fused alumina coping and more particularly for producing crystal hardened, fused alumina coping, of a metal-free dental prosthesis. The standard preparation steps before starting to produce any type of coping are:
I) preparing a tooth to be restored in such a manner that attachment of a dental prosthesis is facilitated;
II) taking a negative impression of the prepared tooth;
III) forming a positive impression of the prepared tooth based on the negative impression wherein this positive impression is called a die or tooth model.

Then, a coping can be produced based on the tooth model. Any conventional material suitable for use in producing tooth model, particularly plaster, can be used herein. Normally, a full mouth negative impression is taken from a patient and a full mouth positive impression is formed. An individual tooth model of the tooth to be restored is then sawed out from the full mouth positive impression.

The method for producing ceramic coping of the present invention comprises the following steps:
i) covering a tooth model with at least two layers of plastic;
ii) coating the plastic covered tooth model from step (i) with fused alumina gel and letting it dry to form a ceramic coping in green state;
iii) sintering the ceramic coping in green state from step (ii) at a temperature up to 950-1200°C;
iv) coating the ceramic coping from step (iii) with crystal powder;
   crystal hardening the crystal powder coated ceramic coping from step (iv) at a temperature up to 1180°C.
v) Then, the finished ceramic coping can be coated with an outer aesthetic layer to form a dental prosthesis.

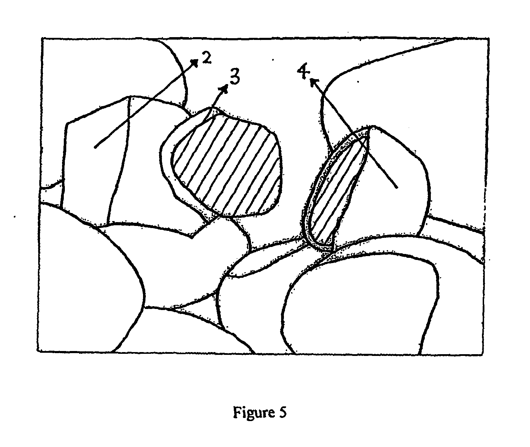

The tooth model is covered with at least one layer of plastic to allow the ceramic coping in green state to be separated from the tooth model and to create space in between the inner surface of the finished ceramic coping and the outer surface of the tooth to be restored. Each layer of plastic preferably has a thickness of 0.1 - 0.15 mm. The tooth model is still covered with a layer of plastic after the ceramic coping in green state is separated from it whereas the other layer of plastic formed an inner lining of the ceramic coping in green state (as illustrated by Figure 5). The-plastic inner lining of the ceramic coping in green state is incinerated in the sintering step; hence the sintered ceramic coping would not have a plastic inner lining. The plastic material used is characterized as being thermoplastic and can be incinerated at high temperature during the sintering step, an example of the plastic material used is polyvinylchloride (PVC).

The method as mentioned above is for producing an individual ceramic coping of a metal-free dental crown. The method for producing a ceramic coping of a metal-free dental bridge of any unit is the same as for producing an individual ceramic coping of a metal-free dental crown except that additional steps are needed to build junctures [5] between individual ceramic copings. For building the junctures [5] between individual ceramic copings, individual tooth models with individual ceramic copings formed on them as produced by following steps (i) and (ii) as mentioned above are first being arranged and held together according to their original full mouth position. Then, fused alumina gel is being applied in between two adjacent individual ceramic copings as juncture material and it is let dry to form a ceramic coping of a metal-free dental bridge in green state. After that, steps (iii) to (v) as mentioned above are taken to produce the finished crystal hardened ceramic coping of a metal-free dental bridge.

The steps for producing ceramic coping as mentioned above would be described in a more detailed manner below according to a preferred embodiment of the present invention.

### Step (i): covering a tooth model with two layers of plastic

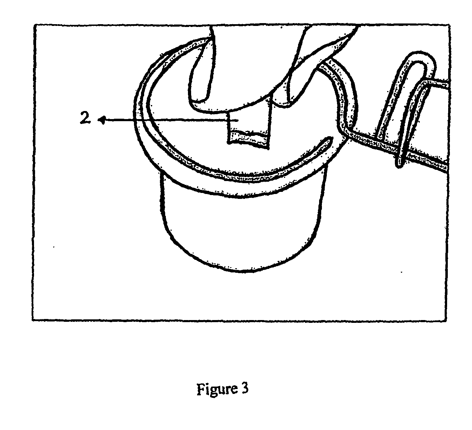

To carry out step (i), the following steps are taken:
a) marking the margin [3] of the tooth model [1];
b) stacking a layer of polyvinylchloride (PVC) foil having thickness of 0.1 - 0.15 mm on top of a layer of polypropylene (PP) foil having thickness of 0.5 - 0.6 mm and heating them on a propane gas flame until they are deformable;
c) placing the now deformable plastic foils from step (b) on top of a jar filled with silicon or any other pressure deformable material;
d) dipping the tooth model [1] into the deformable plastic foils covered silicon jar from step (c) so that the plastic foils would deform to take the shape of the tooth model [1] (as illustrated by Figure 3);
e) cutting out the part of the plastic foils which has taken the shape of the tooth model [1] along the margin [3];
f) separating the PVC layer of the cut-out from the PP layer;
g) placing the PVC cut-out from step (f) on the tooth model [1] so that the tooth model [1] is covered with a first layer of plastic;
h) repeating steps (b) to (g) on the tooth model [1] covered with the first layer of plastic so that it would be covered with a second layer of plastic.

The PVC foil can be destroyed easily if it is directly being heated on a propane gas flame. Therefore, the PVC foil is stacked on top of a PP foil so that the PP foil would act as a heat transfer material and at the same time protecting the PVC foil from direct heat during the heating step (b).

### Step (ii): coating the plastic covered tooth model from step (i) with fused alumina gel and letting it dry to form a ceramic coping in green state

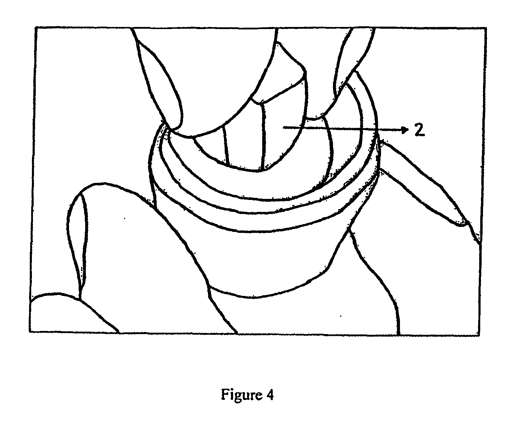

To carry out step (ii), firstly the plastic layers are taken off from the tooth model [1]. Secondly, the tooth model [1] is painted with varnish. When the varnish has dried off, the plastic layers are being put on the tooth model [1] again and the body [2] of the tooth model [1] which is not covered by the plastic layers is painted with separator oil. Then, the plastic covered tooth model [1] is coated with fused alumina gel comprising an aqueous suspension of alumina powder by dipping the plastic covered tooth model [1] into the fused alumina gel (as illustrated by Figure 4). A ceramic coping [4] in green state is formed on the tooth model [1] when the fused alumina gel has dried off. If excessive fused alumina gel has covered the margin [3] of the tooth model [1], the excessive fused alumina gel can be scraped off along the margin [3]. Preferably, the alumina powder in the fused alumina gel used has an average particle size of about 2.5 - 5.5 microns and more preferably the fused alumina gel used is those available under the trade name of Turkom-Cera.

### Step (iii): sintering the ceramic coping in green state from step (ii) at a temperature 950-1200°C

To carry out step (iii), the ceramic coping [4] in green state formed in step (ii) is taken off from the tooth model [1] and placed on a sintering tray. The ceramic coping [4] in green state is then being sintered according to the following program.

**Table 1: Sintering Program**

| Pre-drying / Base Temperature (°C) | Pre-drying Time (minute) | Drying Time (minute) | Heat Rate (°C/minute) | Final Temperature (°C) | Holding Time (minute) | Holding Time Without Vacuum (minute) |
|---|---|---|---|---|---|---|
| 500-600 | 3-6 | 4-9 | 80-120 | 950-1200 | 5-10 | 3-5 |

According to the sintering program, the ceramic coping [4] in green state is pre-dried at 500 - 600°C for 3 - 6 minutes and then the temperature is gradually increased at a rate of 80 - 120°C/minute until it reaches the final temperature of 950 - 1200°C. Following that, the final temperature is held for 5 - 10 minutes. The sintering process is conducted under vacuum except for the last 3 - 5 minutes when the final temperature is held. The time spent for sintering the ceramic coping in green state is in the range of about 12 to 25 minutes.

At this stage, the contour of the ceramic coping [4] can be refined by using a coarse-grained diamond burr rotating at a speed of 2000 - 3000 rpm. The thickness of the ceramic coping [4] can also be adjusted to as thin as 0.3 mm in the same manner.

Prior to the next step, the refined ceramic coping [4] is put back on the tooth model [1] for checking the fit of the ceramic coping [4].

### Step (iv): coating the ceramic coping from step (iii) with crystal powder

As the ceramic coping [4] coated with crystal powder would be very hard after firing, it is important that the fit of the ceramic coping [4] is ensured and the contour of the ceramic coping [4] is refined before proceeding with this step.

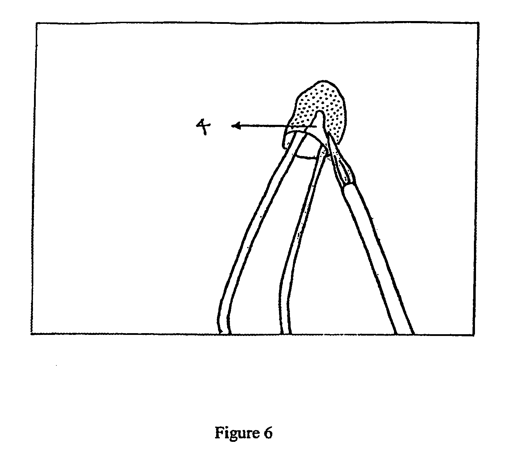

To carry out step (iv), firstly crystal powder is mixed with distilled water to obtained a thin paste. Then, the crystal powder paste is being applied on the ceramic coping [4] at a thickness of approximately 1 - 2 mm without covering the margin [3] of the ceramic coping [4] (as illustrated by Figure 6). Preferably, the crystal powder used is the crystal powder composed of 10 mineral components and more preferably the crystal powder used is those available under the trade name of Turkom-Cera.

### Step (v): crystal hardening the crystal powder coated ceramic coping from step (iv) at a temperature 1160 to 1180°C.

To carry out step (v), the crystal powder coated ceramic coping [4] is placed on platinum rods which act as supports of the crystal powder coated ceramic coping [4] during the crystal hardening process. The crystal powder coated ceramic coping [4] goes through the crystal hardening process according to the following program:

**Table 2: Crystal Hardening program**

| Pre-drying / Base Temperature (°C) | Pre-drying Time (minute) | Drying Time (minute) | Heat Rate (°C/minute) | Final Temperature (°C) | Holding Time (minute) | Holding Time Without Vacuum (minute) |
|---|---|---|---|---|---|---|
| 500 - 600 | 3 - 6 | 4 - 9 | 80 - 120 | 1160 - 1180 | 30 - 50 | 15 - 20 |

According to the crystal hardening program, the crystal powder coated ceramic coping [4] is pre-dried at 500 - 600°C for 3 - 6 minutes and then the temperature is gradually being increased at a rate of 80 - 120°C/minute until it reaches the final temperature of 1160 - 1180°C. Following that, the final temperature is held for 30 - 50 minutes. The crystal hardening process is preferably conducted under vacuum except for the last 15 - 20 minutes when the final temperature is held. The holding time whereby the final temperature is held would be longer for producing a crystal hardened ceramic coping of a dental bridge than for a dental crown but it would be still within the range of 30 - 50 minutes. The time spent for crystal hardening process of the crystal powder coated ceramic coping is in the range of about 37 to 65 minutes.

The crystal hardening process as stated in step (v) entails the process of stiffening and for providing superior mechanical strength of the ceramic coping.

Excess glass can be removed from the crystal hardened ceramic coping [4] by using a fine-grained diamond burr and the finished ceramic coping [4] is ready to be coated with an outer aesthetic layer to form a dental prosthesis. The process of coating a coping with an outer aesthetic layer is termed as a porcelain build-up process as the material used for forming the outer aesthetic layer is normally porcelain.

In the method of present invention, the ceramic coping in green state is not directly attached to or formed on the tooth model but attached to or formed on a layer of plastic which results in easy separation of the ceramic coping in green state from the tooth model without the need of a baking step with stringent temperature control as specified in European patent number 0241384. The method of present invention also needs no mould casting step and no high price apparatus, hence it is time, energy and cost efficient. The crystal hardened ceramic coping produced according to the method of present invention can exhibit flexural strength of up to 530-630 MPa and a hardness of 12 according to Mohs Scale of Mineral Hardness.

## Claims

1. A method for producing ceramic coping of a dental prosthesis comprising the following steps:
i) covering a model of the tooth to be restored with at least one layer of plastic;
ii) coating the plastic covered tooth model from step (i) with alumina gel and letting it dry to form a ceramic coping in green state;
iii) sintering the ceramic coping in green state from step (ii) at a temperature up to 1200°C;
iv) coating the ceramic coping from step (iii) with crystal hardening powder;
v) firing the crystal hardening powder coated ceramic coping from step (iv) at a temperature up to 1200°C for effecting crystal hardening of the ceramic coping.

2. A method as claimed in claim 1 with incorporation of the following steps in between step (ii) and step (iii):
a) arranging and holding together individual tooth models with ceramic copings formed on them, as produced by following steps (i) and (ii), according to their full mouth position;
b) applying alumina gel in between adjacent ceramic copings as juncture material and letting it dry to form the ceramic coping of a dental bridge in green state.

3. A method as claimed in claim 1 or 2 wherein the sintering step (iii) is conducted under vacuum for 12 to 25 minutes.

4. A method as claimed in claim 1 or 2 wherein the alumina can be in the forms of gel, cream, paste or fluid.

5. A method as claimed in claim 4 wherein the alumina gel, cream, paste or fluid can be used in addition with hydrofluoric acid, hydrochloric acid, nitric acid and citric acid, with the concentration of at least from 0.01 ml in water.

6. A method as claimed in claim 3 wherein the sintering step (iii) is carried out according to the following steps:
a) pre-drying the ceramic coping in green state at 500°C - 600°C for 3 - 6 minutes;
b) increasing the temperature at a rate of 80°C - 120°C/minute until it reaches the final temperature of 1100°C - 1200°C;
c) holding the final temperature for 5 - 10 minutes whereby in the last 3 - 5 minutes of the holding time, the vacuum condition is lifted.

7. A method as claimed in claim 1 wherein the firing step (v) is conducted under vacuum for 37 to 65 minutes.

8. A method as claimed in claim 7 wherein the firing step (v) is carried out according to the following steps:
a) pre-drying the crystal hardening powder coated ceramic coping at 500°C - 600°C for 3 - 6 minutes;
b) increasing the temperature at a rate of 80°C - 120°C/minute until it reaches the final temperature of 1160°C - 1200°C;
c) holding the final temperature for 30 - 50 minutes whereby in the last 15 - 20 minutes of the holding time, the vacuum condition is lifted.

9. A method as claimed in claim 1 wherein each plastic layer used in step (i) has a thickness of 0.05 - 0.15 mm.

10. A method as claimed in claim 1 wherein the plastic material used is polyvinylchloride (PVC).

11. A method as claimed in claim 1 wherein the plastic material can be replaced with wax, paraffin or space varnish.

12. A method as claimed in claim 10 wherein step (i) is carried out according to the following steps:
a) marking the margin of the tooth model;
b) stacking a layer of polyvinylchloride (PVC) foil having thickness of 0.05 - 0.15 mm on top of a layer of polypropylene (PP) foil having thickness of 0.5 - 0.6 mm and heating them on a propane gas flame until they are deformable;
c) placing the now deformable plastic foils from step (b) on top of a jar filled with silicon or any other pressure deformable material;
d) dipping the tooth model into the deformable plastic foils covered silicon jar from step (c) so that the plastic foils would deform to take the shape of the tooth model;
e) cutting out the part of the plastic foils which has taken the shape of the tooth model along the margin;
f) separating the PVC layer of the cut-out from the PP layer;
g) placing the PVC cut-out from step (f) on the tooth model so that the tooth model is covered with a first layer of plastic;
h) repeating steps (b) to (g) on the tooth model covered with the first layer of plastic so that it would be covered with a second layer of plastic, in the event that there is more than one layer to be applied.

13. A ceramic coping of a dental prosthesis produceable according to the method as claimed in claim 1.

14. A ceramic coping as claimed in claim 13 wherein the ceramic coping exhibits a flexural strength up to 1200 MPa.

15. A ceramic coping as claimed in claim 13 wherein the ceramic coping exhibits a hardness of 12 according to the Mohs Scale of Mineral Hardness.
